# FASCICULE DE BREVET EUROPEEN

(11) **EP 1 198 393 B1**
(45) Date de publication et mention de la délivrance du brevet: **23.07.2003**
(21) Numéro de dépôt: 00958636.3
(22) Date de dépôt: 28.07.2000
(51) Int. Cl.: B65D 77/22

(54) **VALVE ET EMBALLAGE POUR CUISSON D'ALIMENTS**
VENTIL UND VERPACKUNG ZUM KOCHEN VON SPEISEN
VALVE AND PACKAGE FOR COOKING FOOD

(30) Priorité: 29.07.1999 FR 9910048; 30.11.1999 FR 9915107
(43) Date de publication de la demande: 24.04.2002
(73) Titulaire: Proplast, 59148 Flines lez Raches (FR)
(72) Inventeur: GUITTON, Didier, F-17300 Rochefort sur Mer (FR); CROSS, Anthony, Bernard, B-7500 Tournai (BE); NEPPER, Jacques, B-4000 Liège (BE)
(74) Mandataire: Hennion, Jean-Claude
(86) Numéro de dépôt international: FR0002166
(87) Numéro de publication internationale: WO01009003

(56) Documents cités:
- EP-A- 0 023 703
- EP-A- 0 967 160
- DE-A- 3 925 622
- FR-A- 2 656 280
- FR-A- 2 698 082
- FR-A- 2 731 414
- US-A- 5 307 985

## Description

La présente invention concerne une valve pour un emballage dans lequel un produit est soumis à un traitement thermique provoquant un dégazage, ladite valve étant en communication avec au moins une ouverture donnant dans l'emballage et coopérant avec un moyen d'étanchéité pour permettre le dégazage par ladite ouverture pendant le traitement et empêcher le retour d'air en fin de traitement. Elle concerne également un emballage équipé d'une telle valve, applicable dans des domaines très divers tels que la cuisson d'aliments, la stérilisation de produits à usage unique dans le domaine médical, l'emballage de préparations pharmaceutiques, médicinales, cosmétologiques.

S'agissant de la cuisson d'aliments, sa réalisation dans un emballage à valve présente un certain nombre d'avantages, parmi lesquels la conservation de la couleur et du goût des aliments. Il a en effet été constaté que le dégazage réalisé lors de la cuisson, grâce à la valve, a pour effet de maintenir la chlorophylle verte par rapport à une cuisson sous vide qui l'aurait dénaturée. D'autre part, le goût est préservé du fait qu'il s'agit d'une cuisson à l'atmosphère. Enfin, comparativement à une cuisson sous vide, la cuisson dans un emballage à valve génère des quantités d'exsudats plus limitées.

Pour réaliser la cuisson, les aliments sont d'abord placés dans un emballage qui est refermé par un opercule de scellage, un couvercle serti ou tout autre moyen approprié. Une valve est mise en communication avec au moins une ouverture donnant dans l'intérieur dudit emballage. Cette valve doit permettre l'évacuation des gaz sous pression lors de la cuisson et doit réaliser la fermeture étanche de l'emballage en fin de cuisson, notamment lors du refroidissement de l'emballage.

Lors du traitement thermique que constitue la cuisson des aliments, l'emballage est soumis à une pression interne qui résulte notamment du dégazage des aliments, des réactions des différents constituants contenus dans l'emballage, de la dilatation de l'espace de tête, c'est-à-dire de l'espace entre l'opercule et les aliments et enfin de la pression de la vapeur d'eau. La valve doit donc réagir en tenant compte des deux principaux paramètres de fonctionnement que sont la pression et la température.

On a déjà proposé bon nombre de types de valves pour emballage pour cuisson d'aliments.

Dans le document FR 2 656 280, la valve est constituée par une languette articulée sur le bord de l'emballage, repliée vers l'intérieur de celui-ci après remplissage par les aliments et avant scellement de l'opercule, ladite languette comportant sur sa face horizontale un siège perforé dans lequel est déposée une goutte de résine composite devenant poreuse à une température déterminée ; de plus, l'opercule est percé à l'endroit précis où est située la goutte de résine composite. Bien que cela ne soit pas explicitement décrit dans ce document, on comprend que lors de la cuisson des aliments la température est telle que la résine est poreuse et laisse s'échapper les gaz sous pression hors de l'emballage, tandis que lors du refroidissement, en fin de cuisson, l'abaissement de température est tel que la résine perd son caractère poreux et obture le trou pratiqué dans le siège du rebord.

Dans le document FR 2 698 082, la valve est formée uniquement par un trou ménagé dans le rebord de l'emballage et par une couche en substance ayant un point de fusion compris entre 65 et 150°C, interposée entre l'opercule et la partie du rebord autour du trou. Lors de la cuisson, l'opercule se soulève sous l'effet de la pression interne. Le dégazage peut avoir lieu par le trou ménagé dans le rebord. En fin de cuisson, lors du refroidissement, il se crée un vide à l'intérieur de l'emballage qui plaque l'opercule sur le rebord. La couche interposée entre l'opercule et la partie du rebord autour du trou réalise le collage étanche de l'opercule sur le rebord, empêchant l'air extérieur d'y pénétrer. La substance, ayant un point de fusion compris entre 65 et 150°C, est de préférence une colle fusible, notamment alimentaire, telle qu'une colle hot-melt, à base de résine terpénique et/ou de polymère vinylique.

Le document FR 2 731 414 décrit un emballage permettant l'évacuation des surpressions internes qui comporte un récipient fermé par un opercule scellé sur le pourtour du récipient le long d'un cordon de scellement . Sur le bord du récipient, en deçà du cordon de scellement, sont disposés, des moyens formant valve. Ces moyens formant valve comportent un orifice ménagé dans le bord du récipient et qui communique avec l'extérieur du récipient et une couche de matériau thermofusible disposée sur la face interne de l'opercule et destinée à assurer, à l'état solide , la liaison de l'opercule avec le bord du récipient. En cas de surpression à l'intérieur du récipient due à une élévation de température, le matériau thermofusible fond et concomitamment l'opercule se soulève laissant ainsi passer les gaz sous pression par l'orifice ménagé dans le bord du récipient. La fermeture de ces moyens formant valve n'est obtenue que lorsque d'une part la pression interne est égale ou de préférence inférieure à la pression externe en sorte que l'opercule reprenne une position horizontale permettant à la couche de matériau thermofusible de venir en contact avec le bord du récipient et que d'autre part ce matériau thermofusible est revenu à l'état solide.

Dans le premier document FR 2 656 280, c'est la résine composite fusible, à caractère poreux à une température déterminée, qui joue le rôle de clapet anti-retour de la valve, en obturant le trou pratiqué dans le siège du rebord.

Dans le document FR 2 698 082, c'est l'opercule de scellage qui joue le rôle de clapet anti-retour, la colle thermofusible ayant pour fonction de faire adhérer ledit opercule sur le pourtour du trou ménagé dans le rebord de l'emballage.

Dans le document FR 2 731 414, c'est bien le matériau thermofusible qui fait office de moyen d'étanchéité entre le bord du récipient et l'opercule. En revanche, la fermeture des moyens formant valve n'étant obtenue qu'à basse température et en tout état de cause en l'absence de surpression dans le récipient, il existe un risque de contamination du contenu du récipient du fait d'un retour d'air aspiré à travers l'orifice.

Il existe un troisième type de valves de dégazage pour emballages mais ces emballages ne sont pas utilisés pour la cuisson d'aliments. Ils sont plus particulièrement mis en oeuvre pour l'emballage du café. Un tel emballage à valve permet d'ensacher, dès sa torréfaction, le café moulu, évitant ainsi tout risque d'oxydation. La valve, tout en empêchant l'entrée d'air, permet au café de dégager progressivement le surplus naturel de gaz carbonique qui se produit après la torréfaction.

Dans cet emballage, la valve comporte une feuille souple qui est fixée uniquement par certaines zones, de préférence longitudinales, sur un socle, lui-même fixé, notamment par collage ou thermoscellage, autour d'un trou de dégazage percé dans l'emballage. De plus, ladite valve comporte un moyen d'étanchéité qui est une huile silicone localisée entre la feuille souple et le socle. Lors du dégagement des gaz après torréfaction, la feuille souple se soulève sous l'effet de la pression interne, ce qui donne naissance à un canal d'échappement entre la feuille souple et l'emballage dans la zone où ladite feuille souple n'est pas fixée sur le socle. En fin de dégazage, l'huile silicone se répartit entre la feuille et le socle et forme un joint d'étanchéité empêchant toute entrée d'air dans l'emballage.

Ce troisième type de valve n'est pas transposable en l'état aux emballages à valve pour cuisson d'aliments. En effet, dans ce cas, le refroidissement de l'emballage se fait généralement à des températures basses, où les huiles silicones perdent leur propriété d'étanchéité. De plus, dans le cas d'aliments humides comportant une phase liquide telle qu'une sauce, il y a un risque de contamination de l'huile silicone de la valve par le liquide, ce qui peut modifier les propriétés de l'huile silicone assurant l'étanchéité et rendre inefficace la valve. Par ailleurs, en cas de diminution de la pression ambiante, notamment s'agissant d'un emballage destiné au transport aérien, la valve qui utilise l'huile silicone peut s'ouvrir spontanément du fait de cette diminution de pression, avec le risque de contamination par le liquide contenu dans l'emballage conduisant à un défaut d'étanchéité de la valve.

Le but que s'est fixé le demandeur est de proposer une valve pourvue d'un moyen d'étanchéité durable et efficace et qui permette notamment d'éviter tout risque de contamination du contenu de l'emballage.

Ce but est parfaitement atteint par un emballage équipé d'une valve et fermé par un opercule , cet emballage contenant un produit et ladite valve étant rapportée par-dessus une ouverture donnant sur l'intérieur de l'emballage et pratiquée dans l'opercule. Cette valve comprend un socle de base , une feuille souple et un composé d'étanchéité. Le socle de base possède un évidement central et est fixé sur l'opercule en sorte que l'évidement central entoure ladite ouverture. La feuille souple est fixée uniquement par certaines zones sur ledit socle. Quant au composé d'étanchéité , il est solide ou pâteux à température ambiante , étant alors imperméable aux gaz, aux liquides et de préférence aux micro-organismes. Il passe à l'état liquide , non collant, par élévation de température et se répartit alors entre le socle et la feuille souple. Ainsi lors d'un traitement thermique , l'ouverture de la valve est obtenue sous l'effet d'une surpression interne à l'emballage qui est suffisante pour que la feuille souple se détache du composé d'étanchéité et forme un canal d'échappement selon les zones non fixées entre le socle et la feuille souple, tandis que la fermeture de la valve est obtenue , alors qu'il règne encore une surpression dans l'emballage, par rapprochement de la feuille souple et du socle du fait des forces de cohésion entre le composé d'étanchéité à l'état liquide et le socle d'une part et la feuille souple d'autre part. Lors du refroidissement , en fin de traitement thermique , la solidification du composé d'étanchéité fixe la feuille souple sur le socle et verrouille ainsi la valve dans sa position fermée.

La fermeture de la valve de l' invention étant obtenue à partir du moment où la pression interne de l'emballage atteint une valeur donnée qui correspond à une surpression par rapport à la pression extérieure, tout risque de contamination du produit contenu dans l'emballage du fait d'un retour d'air est ainsi évité. En effet, le composé d'étanchéité qui est à l'état solide ou pâteux, à température ambiante, se liquéfie lorsque la température s'élève et parvient à son point de fusion. Lors du traitement thermique, la pression interne dans l'emballage augmente et tend à écarter la feuille souple du socle au niveau de l'évidement central. Cette pression s'oppose aux forces de cohésion entre la couche de composé liquide et les deux parois constituées par le socle d'une part et la feuille souple d'autre part. Lorsque la force exercée par la pression interne est supérieure à ces forces de cohésion, alors il y a séparation des deux parois et création d'un canal d'échappement. C'est cette ouverture de la valve qui entraîne le dégagement des gaz vers l'extérieur de l'emballage. Lorsque la pression interne diminue du fait de l'évacuation des gaz, et atteint une valeur donnée, qui correspond néanmoins à une surpression par rapport à la pression extérieure, l'action des forces de capillarité exercées par le composé d'étanchéité à l'état liquide entre les deux parois devient supérieure à cette surpression et provoque un déplacement du composé d'étanchéité et la fermeture du canal d'échappement et donc de la valve. Pendant tout le traitement thermique, on a une succession d'ouvertures et de fermetures de la valve. A la fin du traitement thermique, on refroidit l'emballage, ce qui a pour effets de diminuer la pression interne de l'emballage , de provoquer la fermeture de la valve , de faire passer le composé d'étanchéité de l'état liquide à l'état solide ou pâteux ce qui verrouille la valve et enfin de créer un vide à l'intérieur de l'emballage.

Il est à noter que le mode de fonctionnement du composé d'étanchéité de l'invention est basé sur le fluage de celui-ci à l'état liquide entre deux parois. Au contraire, cette caractéristique est évitée dans l'emballage du document FR 2 731 414 faute de quoi on aurait une obturation permanente du trou de dégazage.

De préférence le composé d'étanchéité est choisi parmi le groupe comprenant, en pur ou en mélange,
a) les paraffines,
b) les composés à comportement paraffinique avec palier de solidification, celle-ci se faisant sous forme de macro-cristaux,
c) les cires microcristallines et
d) les paraffines additivées.

Grâce à la sélection parmi ce groupe de composés, le changement de phase, de l'état liquide à l'état solide ou pâteux est quasiment instantané et permet d'éviter le passage de composé à l'état liquide par l'ouverture.

Compte-tenu de la variété des comportements rhéologiques observés pour les composés ci-dessus, on désigne ici par point de fusion, afin de simplification, tant :
- la température du palier de solidification des composés tels que les paraffines (par exemple selon NFT 60-114) ;
- que le point de ramollissement des paraffines additivées (par exemple selon NFT 60-147) ;
- que le point de fusion conventionnel des cires microcristallines, tel qu'il peut être mesuré par exemple par la norme NFT-60-121.

Les paraffines sont des mélanges d'hydrocarbures solides appartenant à la famille des alcanes, dont le point de fusion est compris entre 48° et 70°C maximum. Il est possible d'obtenir une paraffine ayant un point de fusion, précis à 1° C.

Contrairement aux résines thermofusibles du type hot-melt, voire même contrairement aux cires, la paraffine a un point de fusion qui présente un palier de solidification. En d'autres termes, le passage de la phase solide à la phase liquide et inversement, pour une paraffine donnée, se produit dans une zone très faible de température de quelques degrés.

Lorsque le composé d'étanchéité est une paraffine ou un composé à comportement paraffinique, la valve présente un seuil de fonctionnement précis, à une température déterminée en fonction du choix de la paraffine ou du composant à comportement paraffinique.

Par ailleurs, le caractère cristallin en macro-cristaux de la paraffine solide, qui s'explique par la forte proportion d'hydrocarbures à chaîne droite, forme, par l'imbrication des cristaux entre eux, une barrière difficilement franchissable par l'eau, les graisses et même les gaz lorsque la paraffine est à l'état solide. La paraffine solidifiée entre les parois de la valve permet donc d'assurer l'étanchéité parfaite de celle-ci.

De préférence, la paraffine ou le composé à comportement paraffinique a un point de fusion compris entre 48° et 53° C, de préférence 51° C.

Cette température de fusion, relativement basse, présente l'avantage de pouvoir soumettre l'emballage à valve à un traitement thermique à une température relativement basse, par exemple s'agissant de cuisson d'aliments à partir de 60° C, ce qui n'est pas le cas des emballages à valve classique mettant en oeuvre des résines thermofusibles du type hot-melt, la résine restant sensiblement solide à cette température.

Bien sûr, le fait de pouvoir mettre en oeuvre l'emballage à valve selon l'invention dans le cadre d'un traitement thermique à relativement basse température dès 60°C n'empêche pas qu'il est possible de l'utiliser à de plus hautes températures, y compris de l'ordre de 130° C. L'utilisateur a donc une gamme de températures beaucoup plus large pour la mise en oeuvre d'un même emballage.

De préférence la feuille souple est fixée sur le socle par deux bords longitudinaux.

Lors de la fabrication de la valve, le composé d'étanchéité peut se présenter sous la forme d'une goutte (solidifiée ou pâteuse) de matière placée contre la face interne de la feuille souple. Lors de l'élévation de température, cette goutte va se liquéfier et du fait de l'action capillaire va se répartir de manière homogène entre la feuille souple et le socle.

Le composé d'étanchéité peut également se présenter sous la forme d'un revêtement continu sur toute la face de l'une ou l'autre des deux parois de la valve constituées par la feuille souple et le socle, étant réalisé par exemple par enduction.

Les forces de cohésion entre le composé d'étanchéité à l'état liquide et les deux parois sont fonctions non seulement de la tension de surface du composé d'étanchéité mais également de la quantité de composé mise en oeuvre et donc de la surface sur laquelle le composé à l'état liquide se répartit entre la feuille souple et le socle. Avantageusement la quantité de composé d'étanchéité est inférieure ou égale à 10g/m² de surface commune entre les deux parois.

De préférence la valve s'ouvre à une pression interne dans l'emballage, relativement basse, de l'ordre de 10 millibars. Ceci évite une déformation trop importante de l'emballage et notamment de son opercule.

De plus, de préférence, la valve se referme à une pression positive, de l'ordre de 3 millibars afin d'éviter tout phénomène de réaspiration et donc de pénétration dans l'emballage de gaz, liquides ou micro-organismes venant de l'extérieur.

Ces conditions de fonctionnement sont tout à fait réalisables par un choix adéquat des matériaux des deux parois constituées par la feuille souple et le socle, du composé d'étanchéité, de la surface des parois et du trou de dégazage de l'emballage et de la quantité de composé d'étanchéité pour obtenir des forces de cohésion permettant de compenser en partie la pression interne de l'emballage qui correspond à une surpression.

L'invention se rapporte, selon un deuxième aspect, à l'application d'un emballage à valve tel que présenté ci-dessus à des emballages de produits alimentaires subissant après leur emballage au moins un traitement thermique à une température supérieure à 60°C.

L'invention se rapporte, selon un troisième aspect, à l'application d'un emballage à valve tel que présenté ci-dessus à des emballages de produits à usage unique tels que produits médicaux ou pharmaceutiques, ces produits subissant après leur emballage au moins un traitement de stérilisation.

D'autres objets et avantages de l'invention apparaîtront au cours de la description suivante d'exemples de réalisation d'emballages à valve, pour cuisson d'aliments, description qui va être faite en se référant aux dessins annexés dans lesquels :
- la figure 1 est une représentation schématique de dessus d'un exemple de réalisation d'un emballage à valve selon l'invention,
- la figure 2 est une représentation schématique partielle, en perspective, de l'emballage de la figure 1 selon l'axe II-II,
- la figure 3 est une représentation schématique en coupe de l'emballage de la figure 1 selon l'axe III-III.

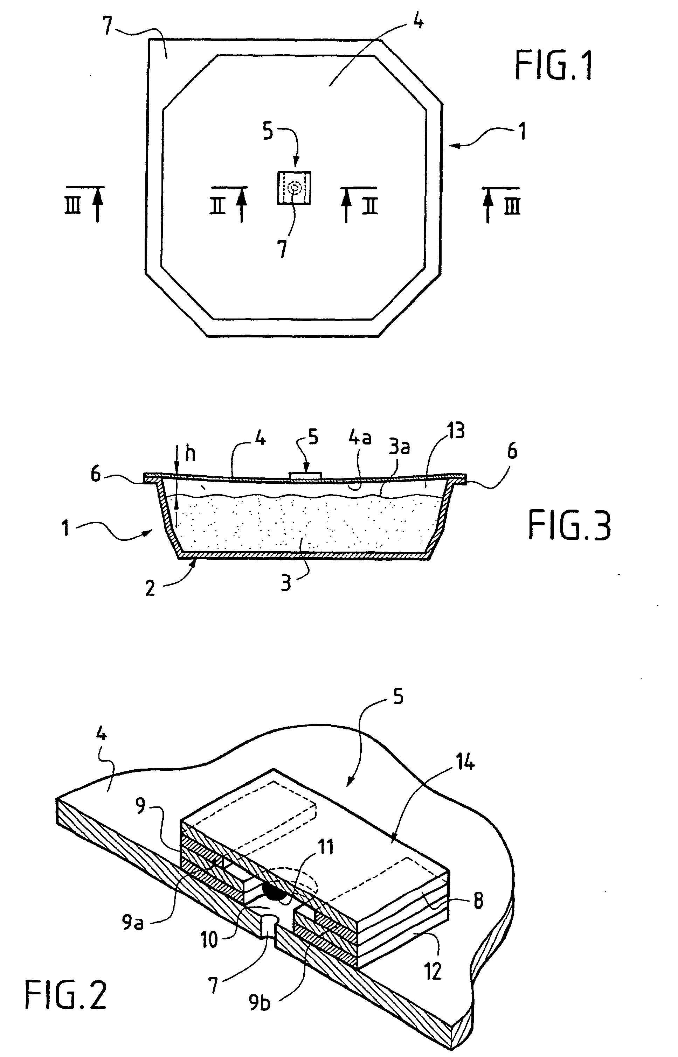

Selon le premier exemple de réalisation illustré aux figures 1 à 3, l'emballage 1, destiné à la cuisson des aliments 3, se compose d'une barquette 2, d'un opercule de scellage 4 et d'une valve de dégazage 5.

L'opercule 4 recouvre la partie ouverte de la barquette 2, une fois que les aliments 3 y ont été placés et est fixé sur le rebord périphérique 6 de ladite barquette 2 par thermoscellage. Cette technique est bien connue. Elle met en oeuvre des films de thermoscellage pelables en polypropylène, par exemple des films commercialisés sous la dénomination « steril'up » par la société ALSACIENNE D'ALUMINIUM ou sous l'appellation « bialon S 65 VFP » par la société WIPAK ou encore sous la référence E63598 par la société SOPLARIL. Il peut également s'agir d'opercules prédécoupés à l'aide par exemple d'aluminium.

L'opercule 4 recouvre la partie supérieure du rebord périphérique 6 de la barquette 2, avec un prolongement formant languette d'ouverture 15. Il suffit à l'utilisateur de se saisir de cette languette 15 et d'exercer une traction pour réaliser l'ouverture de la barquette 2 par pelage de l'opercule 4.

Dans la zone centrale de l'opercule 4 est percé un trou de dégazage 7, qui peut avoir un diamètre de l'ordre de 1mm. Ce trou de dégazage 7 est recouvert d'une valve 5.

Cette valve est constituée d'une feuille souple 8 - par exemple en polyéthylène ou polyester ou polypropylène - qui est fixée, par collage, sur un socle 9 - par exemple en polyéthylène ou polyester ou polypropylène - , lui-même fixé par collage sur l'opercule 4, de telle sorte que la partie centrale évidée 10 du socle 9 soit à l'aplomb du trou de dégazage 7. La feuille souple 8 n'est pas totalement fixée sur le socle 9, mais simplement selon les deux bords longitudinaux 9a, 9b de celui-ci.

De plus, une certaine quantité de produit d'étanchéité 11 solide a été déposée sur la feuille souple 8 préalablement à la mise en place de la valve 5 sur l'opercule 4. Sur la figure 2 cette quantité a été représentée sous la forme d'une goutte qui fait face à l'évidement central 10 du socle 9, formant la chambre intérieure de la valve 5. Cependant ce mode de réalisation n'est pas exclusif ; le produit d'étanchéité 11 solide peut être réparti sur toute la face interne de la feuille souple 8 ou au contraire sur la face externe du socle 9, notamment par enduction.

Dans un premier mode de réalisation, ce produit d'étanchéité est une cire microcristalline, par exemple une cire dénommée ZG ou une cire dénommée ZW par la société Paramelt B.V. (NL).

Par cire microcristalline, on désigne ici une cire comprenant principalement des chaînes hydrocarbonées ramifiées.

De telles cires peuvent être obtenues par extraction et raffinage à partir de pétrole. De structure cristalline plus fine que celles des paraffines courantes, ces cires possèdent de bonnes propriétés de barrière à la vapeur d'eau.

Quelques propriétés des cires ZG et ZW sont mentionnées ci dessous, en référence à des données issues du fabricant.

| | Point de goutte (°C) selon ASTM D | Point de figeage (°C) |
|---|---|---|
| | 3954 | selon NFT 60128 |
| Cire microcristalline ZW | 64-72 | 63-69 |
| Cire microcristalline ZG | 76-84 | 70-76 |

Dans un deuxième mode de réalisation, ce produit d'étanchéité 11 est une paraffine additivée.

L'additif peut être, par exemple, une cire microcristalline ou un mélange de telles cires, ajouté à la paraffine dans une proportion de 5 à 10% par exemple.

A titre d'exemple particulier, une paraffine additivée telle que celle proposée par la société TOTAL FINA sous la référence Flexane 17M peut être utilisée.

De tels produits sont conventionnellement employés pour l'enduction de papiers d'emballage haut de gamme, de carton, en vue de leur conférer un pouvoir de thermoscellage ou une excellente brillance.

Le point de ramollissement de la paraffine additivée Flexane 17M est de l'ordre de 65 à 70°C.

Dans un troisième mode de réalisation, le produit d'étanchéité est une paraffine alimentaire à bas point de fusion, par exemple la paraffine dénommée 50/52 par la société TOTAL, qui a un point de fusion de 51° C avec une tolérance de 1° C.

Dans tous les cas, le produit d'étanchéité rapporté 11 présente les caractères suivants, en combinaison :
- il est liquide à la température de chauffe et notamment de cuisson, de pasteurisation ou de stérilisation des produits emballés tels que par exemple des aliments ;
- sa tension de surface en phase liquide est faible ;
- son pouvoir d'adhésion en phase liquide est faible ;
- il retourne en phase solide lorsque la température est inférieure à une valeur définie, cette température de retour en phase solide étant supérieure à la température ambiante et en tout état de cause inférieure à la température de chauffe, de préférence inférieure à environ 90°C.
- il présente en phase liquide et en phase solide de bonnes propriétés barrières aux liquides, à l'exception bien évidemment de ses solvants organiques, et est sensiblement imperméable aux gaz et ne permet pas le passage de micro-organismes tels que les bactéries.

Pour ce qui est de la température de changement de phase mentionnée ci dessus :
- lorsque le produit employé est une paraffine, un palier de solidification est observé ;
- dans le cas d'emploi de cires, en revanche, seul un point de fusion conventionnel peut être défini comme la température à laquelle une goutte de cire solidifiée dans des conditions normalisées à la pointe d'un thermomètre tombe sous l'effet de son propre poids.

A titre d'exemple, on réalise le dépôt de paraffine solide 11 dans les conditions suivantes. La paraffine est fondue préalablement dans un four à air pulsé à 100° C. Une tige, par exemple en bois, d'un diamètre de 7,5 mm et comportant une extrémité plane est trempée dans la paraffine liquide, déplacée au-dessus de la valve 5, de telle sorte qu'une goutte de paraffine liquide soit déposée à chaud sur la face interne de la feuille souple 8 au droit de l'évidement central 10 du socle 9. Cette opération peut être réalisée en continu et de manière automatique à l'aide d'un fondoir à paraffine et un doseur spécifique, en déroulant à l'envers, un ruban supportant les valves 5 dont la base du socle 9 est recouvert d'un adhésif 12 sensible à la pression mécanique.

Chaque valve 5, déjà pourvue de la paraffine - devenue solide après son refroidissement - est déposée sur l'opercule 4 comme une étiquette adhésive.

L'emballage 1 ainsi constitué est soumis à un traitement thermique à une température comprise entre 60° C et 130° C. Dans le présent texte, il est fait mention de manière habituelle d'un traitement de cuisson ; il peut s'agir d'une cuisson proprement dite ou de tout autre type de traitement thermique du type stérilisation ou pasteurisation.

Le fluide caloporteur est préférentiellement la vapeur mais il peut également s'agir d'air pulsé ou d'air humide, voire même d'eau chaude. Le chauffage peut aussi être réalisé par thermocontact.

La cuisson peut se faire de façon discontinue, par exemple dans un four à chariot muni de claies, un autoclave ou une cuve remplie d'eau chaude. Elle peut se faire également en continu, par exemple grâce à un convoyeur linéaire ou une bande transporteuse passant dans une enceinte régulée en température.

Lors de la cuisson d'aliments, l'emballage 1 est soumis à une pression interne qui est la résultante de quatre pressions partielles, à savoir la pression de vapeur d'eau, qui est une fonction directe de la température, la pression résultant de la dilatation de l'espace de tête 13, c'est-à-dire de l'espace existant entre la face intérieure 4a de l'opercule 4 et le niveau 3a des aliments 3, la pression de dégazage des aliments et enfin la pression résultant des réactions des différents constituants entre eux sous l'effet de la chaleur.

Lors de ce traitement thermique, la goutte solide du produit d'étanchéité tel que, par exemple, une paraffine 11 fond instantanément lorsque la température atteint son point de fusion, par exemple 51° C, température qui est inférieure à la température de cuisson des aliments. La paraffine liquide a une tension de surface faible , de l'ordre de 22,8 dynes / cm, de sorte que, sous l'effet de la pression interne régnant dans l'espace de tête 13 et par conséquent dans l'évidement central 10 du socle 9, elle se répartit spontanément par capillarité entre le socle 9 et la feuille souple 8 qui sont en position rapprochée, ce qui crée une barrière étanche, la valve étant alors fermée. Lorsque la pression interne augmente du fait de la cuisson, au-delà d'un seuil donné, de préférence de l'ordre de 10mbar, la valve s'ouvre, la feuille souple se détachant de la paraffine liquide et formant un canal d'échappement 16 selon les zones 14 non fixées entre la feuille 8 et le socle 9. C'est la phase d'ouverture de la valve et de dégazage, celle-ci durant tant que la pression interne de l'emballage 1 est suffisante pour provoquer la déformation de la feuille souple 8 et pour compenser les forces de cohésion entre la paraffine liquide et les surfaces en regard (socle et feuille souple) ; de préférence la refermeture de la valve intervient à une pression interne de l'ordre de 3mbar.

Durant le traitement thermique, lorsque la pression interne atteint une valeur donnée correspondant à une surpression par rapport à la pression extérieure, l'opercule 4 est bombé et la valve 5 est fermée. La feuille souple 8 est tirée sur le socle 9 du fait de la déformation de ce dernier qui est fixé sur l'opercule 4 présentant une forme convexe, ce qui renforce la fermeture de la valve 5 en plaquant les extrémités de la feuille souple 8 qui ne sont pas solidaire du socle 9 contre ce dernier. L'espace compris entre la feuille souple 8 et l'opercule 4 est ainsi légèrement réduit ce qui renforce les forces de cohésion entre le composé d'étanchéité à l'état liquide 11 et respectivement la feuille souple 8 et le socle 9.

En fin de traitement thermique, notamment lors de l'ouverture de la porte du four de cuisson, lorsque ce traitement est effectué dans un tel four, il se produit une chute rapide de température qui provoque d'une part le changement de phase de la paraffine, qui passe à l'état solide et d'autre part une dépression quasi instantanée à l'intérieur de l'emballage, dépression dénommée également tirage au vide. Ce tirage au vide est fonction de la température atteinte par les aliments 3 à coeur. Si par exemple la température à coeur est de 95° C, on considère qu'il y a dans ce cas une saturation en vapeur dans l'espace de tête 13. Le tirage au vide obtenu par condensation brutale de cette vapeur correspond quasiment à un vide total.

La dépression dans l'espace de tête 13 renforce le plaquage de la feuille souple 8 contre le socle 9. Le composé d'étanchéité 11 qui, à l'état liquide a été réparti entre la feuille 8 et le socle 9 se solidifie dès que la température atteint son point de fusion , en l'occurrence 51°C dans le cas de la paraffine 50/52 de la société TOTAL.

La combinaison du plaquage de la feuille souple 8 contre le socle 9 renforcé par le vide créé dans l'emballage et le changement d'état du composé d'étanchéité réparti à l'interface des deux parois assure un verrouillage de la valve particulièrement efficace et résistant aux multiples agressions et manipulations extérieures que l'emballage peut subir depuis la fin du refroidissement jusqu'à son utilisation par le consommateur final en passant par toutes les étapes intermédiaires de stockage , de transport et de distribution.

Du fait que la paraffine mise en oeuvre comme composé d'étanchéité de la valve 5 a un point de fusion très précis, le seuil de fonctionnement, en température, de ladite valve 5 est constant tant en ouverture qu'en fermeture. Il est aussi possible de travailler à une température relativement basse, par exemple dès 60° C, de préférence en phase vapeur, pour pouvoir profiter de la chaleur latente de condensation de la vapeur cédée à l'emballage.

De manière à éviter une déformation exagérée de l'emballage 1 et notamment de l'opercule 4, il faut limiter la hauteur h de l'espace de tête 13 dans une fourchette de 5 à 10 mm.

Il est à noter que si l'on remplaçait , dans l'emballage qui vient d'être décrit, la paraffine par une colle thermofusible , le fonctionnement de la valve serait perturbé voire rendu impossible en raison du pouvoir adhésif ou de la tension de surface élevée de la colle thermofusible. Ainsi il pourrait se produire une fuite au niveau de la valve 5 du fait que lors du refroidissement de l'emballage 1, la colle qui est encore à l'état plus ou moins fondu serait aspirée par le trou 7 et ne serait pas répartie de manière homogène entre la feuille souple 8 et le socle 9.

Il est également à noter que la valve 5 peut être réutilisée lors de la remontée en température du produit dans un four sans qu'il soit nécessaire de percer préalablement l'opercule avant le réchauffage. En d'autres termes, cette valve est totalement réversible, lorsque le réchauffage est par apport de chaleur. S'agissant de réchauffage par l'action de micro-ondes, il est préférable que le composé d'étanchéité comporte un additif activateur, réagissant aux micro-ondes.

Le refroidissement de l'emballage 1 peut s'effectuer par ventilation d'air froid ou par apport de gaz cryogénique, ou encore à l'eau glacée. Il n'y a aucun inconvénient à ce que la température de refroidissement soit négative, puisque même à des températures de cet ordre, la paraffine ne perd pas ses propriétés d'étanchéité.

L'emballage de l'invention n'est pas limité à son utilisation pour la cuisson d'aliments. Il peut être mis en oeuvre pour contenir des préparations pharmaceutiques, médicinales ou cosmétiques et en particulier comme emballage où sera réalisée, lors du traitement provoquant le dégazage, la stérilisation de produits à usage unique dans le domaine médical.

## Revendications

1. Emballage équipé d'une valve et fermé par un opercule , ladite valve (5) étant rapportée par-dessus une ouverture (7), donnant sur l'intérieur de l'emballage et pratiquée dans l'opercule (4), ladite valve comprenant un socle de base , une feuille souple et un composé d'étanchéité dans lequel emballage :
a) le socle de base (9) possède un évidement central (10) et est fixé sur l'opercule (4) en sorte que l'évidement central (10) entoure ladite ouverture (7),
b) la feuille souple (8) est fixée uniquement par certaines zones (9a, 9b) sur ledit socle (9) et,
c) le composé d'étanchéité, imperméable aux gaz, aux liquides et de préférence aux microorganismes, est solide ou pâteux à température ambiante et passe à l'état liquide , non collant , par élévation de température , se répartissant alors entre le socle (9) et la feuille souple (8), de telle sorte que lors d'un traitement thermique , l'ouverture de la valve est obtenue sous l'effet d'une surpression interne à l'emballage suffisante pour que la feuille souple se détache du composé d'étanchéité et forme un canal d'échappement selon les zones non fixées entre le socle et la feuille souple et la fermeture de la valve est obtenue, alors qu'il règne encore une surpression dans l'emballage, par refermeture dudit canal d'échappement du fait des forces de cohésion entre le composé d'étanchéité à l'état liquide et le socle d'une part et la feuille souple d'autre part, la solidification du composé d'étanchéité lors du refroidissement en fin de traitement thermique fixant la feuille souple (8) sur le socle (9) et verrouillant ainsi la valve (5) dans la position fermée.

2. Emballage selon la revendication 1 **caractérisé en ce que** le composé d'étanchéité (11) est choisi parmi le groupe comprenant en pur ou en mélange,
a) les paraffines,
b) les composés à comportement paraffinique avec palier de solidification, celle-ci se faisant sous forme de macro-cristaux,
c) les cires microcristallines et
d) les paraffines additivées.

3. Emballage selon la revendication 2 **caractérisé en ce que** le composé d'étanchéité (11) est une paraffine ou un composé au comportement paraffinique ayant un palier de solidification compris entre 48°C et 53°C, de préférence 51°C.

4. Emballage selon la revendication 2 **caractérisé en ce que** le composé d'étanchéité (11) est une cire microcristalline dont le point de fusion est compris entre 64 et 72°C.

5. Emballage selon la revendication 2 **caractérisé en ce que** le composé d'étanchéité (11) est de la paraffine additivée dont le point de fusion est compris entre 65 et 70°C.

6. Emballage selon l'une des revendications 1 à 5 , **caractérisé en ce que** la feuille souple (8) est fixée sur le socle (9) par deux bords longitudinaux (9a, 9b).

7. Emballage selon l'une des revendications 1 à 6, **caractérisé en ce que** le composé d'étanchéité (11) est disposé sur la face interne de la feuille souple (8).

8. Emballage selon la revendication 7 **caractérisé en ce que** le composé d'étanchéité (11) est disposé sous forme d'une goutte au niveau de l'évidement central évidé (10).

9. Emballage selon la revendication 7 **caractérisé en ce que** le composé d'étanchéité (11) est disposé sous forme d'un revêtement continu sur la face interne de la feuille souple.

10. Emballage selon l'une des revendications 1 à 9 **caractérisé en ce que** la valve (5) s'ouvre à une pression interne dans l'emballage de l'ordre de 10mbar.

11. Emballage (5) selon l'une des revendications 1 à 10 **caractérisé en ce que** la valve se ferme à une pression interne dans l'emballage de l'ordre de 3mbar.

12. Procédé pour la mise en oeuvre d'un emballage selon l'une des revendications 1 à 11 pour des produits alimentaires selon lequel ledit emballage subit au moins un traitement thermique à une température supérieure à 60°C.

13. Procédé pour la mise en oeuvre d'un emballage selon l'une quelconque des revendications 1 à 11 pour des produits à usage unique tels que produits médicaux ou pharmaceutiques , selon lequel ledit emballage subit au moins un traitement de stérilisation.

## Patentansprüche

1. Verpackung, die mit einem Ventil ausgestattet ist und durch eine Abdeckung verschlossen ist, wobei das Ventil (5) oberhalb einer Öffnung (7) angeordnet ist, die sich zum Innenraum der Verpackung öffnet und in der Abdekkung (4) vorgesehen ist, wobei das Ventil eine Grundplatte, eine weiche Folie und eine Abdichtungsverbindung umfasst, wobei in der Verpackung
a) die Grundplatte (9) eine zentrale Ausnehmung (10) aufweist und auf der Abdeckung (4) so befestigt ist, dass die zentrale Ausnehmung (10) die Öffnung (7) umgibt,
b) die weiche Folie (8) nur in bestimmten Zonen (9a, 9b) auf der Grundplatte (9) befestigt ist und
c) die Abdichtungsverbindung, die für Gase, Flüssigkeiten und vorzugsweise für Mikroorganismen undurchlässig ist, bei Umgebungstemperatur fest oder pastös ist und durch Erhöhung der Temperatur in einen nicht klebenden flüssigen Zustand übergeht, wobei sie sich dann zwischen der Grundplatte (9) und der weichen Folie (8) so verteilt, dass bei einer thermischen Behandlung das Ventil sich öffnet unter dem Einfluss eines Überdrucks im Innern der Verpackung, der ausreicht, damit sich die weiche Folie von der Abdichtungsverbindung trennt und einen Auslasskanal entlang der nicht-fixierten Zonen zwischen der Grundplatte und der weichen Folie bildet, und das Ventil sich schließt, während noch ein Überdruck in der Verpackung herrscht, durch Wiederverschließen des Auslasskanals unter der Einwirkung der Kohäsionskräfte zwischen der Abdichtungsverbindung im flüssigen Zustand und der Grundplatte einerseits und der weichen Folie andererseits, wobei die Verfestigung der Abdichtungsverbindung beim Abkühlen am Ende einer thermischen Behandlung zu einer Fixierung der weichen Folie (8) auf der Grundplatte (9) und somit zu einer Verriegelung des Ventils (5) in der geschlossenen Position führt.

2. Verpackung nach Anspruch 1, **dadurch gekennzeichnet, dass** die Abdichtungsverbindung (11) ausgewählt wird aus der Gruppe, die umfasst, in reiner Form oder in Form einer Mischung,
a) Paraffine,
b) Verbindungen, die sich wie Paraffine verhalten mit einem Verfestigungsplateau, und die in Form von Mikrokristallen vorliegen,
c) mikrokristalline Wachse und
d) mit Zusätzen versehene Paraffine.

3. Verpackung nach Anspruch 2, **dadurch gekennzeichnet, dass** die Abdichtungsverbindung (11) ein Paraffin oder eine Verbindung mit einem paraffinartigen Verhalten ist, die ein Verfestigungsplateau zwischen 48 und 53 °C, vorzugsweise bei 51 °C, aufweist.

4. Verpackung nach Anspruch 2, **dadurch gekennzeichnet, dass** die Abdichtungsverbindung (11) ein mikrokristallines Wachs ist, dessen Schmelzpunkt zwischen 64 und 72 °C liegt.

5. Verpackung nach Anspruch 2, **dadurch gekennzeichnet, dass** die Abdichtungsverbindung (11) mit Zusätzen versehenes Paraffin ist, dessen Schmelzpunkt zwischen 65 und 70 °C liegt.

6. Verpackung nach einem der Ansprüch 1 bis 5, **dadurch gekennzeichnet, dass** die weiche Folie (8) auf der Grundplatte (9) entlang von zwei Längsrändern (9a, 9b) fixiert ist.

7. Verpackung nach einem der Ansprüch 1 bis 6, **dadurch gekennzeichnet, dass** die Abdichtungsverbindung (11) auf der inneren Oberfläche der weichen Folie (8) angeordnet ist.

8. Verpackung nach Anspruch 7, **dadurch gekennzeichnet, dass** die Abdichtungsverbindung (11) in Form eines Tropfens im Bereich der hohlen zentralen Ausnehmung (10) angeordnet ist.

9. Verpackung nach Anspruch 7, **dadurch gekennzeichnet, dass** die Abdichtungsverbindung (11) in Form eines kontinuierlichen Überzugs auf der inneren Oberfläche der weichen Folie angeordnet ist.

10. Verpackung nach einem der Ansprüche 1 bis 9, **dadurch gekennzeichnet, dass** sich das Ventil (5) bei einem Innendruck in der Verpackung in der Größenordnung von 10 mbar öffnet.

11. Verpackung nach einem der Ansprüche 1 bis 10, **dadurch gekennzeichnet, dass** sich das Ventil (5) bei einem Innendruck in der Verpackung in der Größenordnung von 3 mbar schließt.

12. Verfahren zur Verwendung einer Verpackung nach einem der Ansprüche 1 bis 11 für Lebensmittelprodukte, bei dem die Verpackung mindestens einer thermischen Behandlung bei einer Temperatur oberhalb 60 °C unterworfen wird.

13. Verfahren zur Verwendung einer Verpackung nach einem der Ansprüche 1 bis 11 für Einwegprodukte, wie z.B. Arzneimittelprodukte oder pharmazeutische Produkte, bei dem die Verpackung mindestens einer Sterilisierungsbehandlung unterworfen wird.

## Claims

1. A package fitted with a valve and closed by a lidding film , said valve (5) being placed over an opening (7) to the inside of the package and formed through the lidding film (4), said valve comprising a base, a flexible membrane and a sealing compound, in which package :
a) the base (9) possesses a central recess (10) and is fixed to the lidding film (4) in such a manner that the central recess (10) surrounds said opening (7);
b) the flexible membrane (8) is fixed to said base (9) via certain zones only (9a, 9b) ; and
c) the sealing compound , impermeable to gas , to liquids , and preferably also to microorganisms , is solid or semi-solid at ambient temperature and passes to a non-sticky liquid state due to an increase in temperature , then spreading between the base (9) and the flexible membrane (8) so that during heat treatment the valve can be opened under the effect of an excess pressure inside the package rising sufficiently to detach the flexible membrane from the sealing compound and form an exhaust channel in the unfixed zones between the base and the flexible sheet , and the valve is reclosed while the excess pressure inside the package is still positive, by said exhaust channel reclosing due to cohesion forces between the sealing compound in the liquid state and both the base and the flexible membrane , the solidification of the sealing compound during cooling , at the end of heat treatment , fixing the flexible membrane (8) to the base (9) , and thereby locking the valve (5) in the closed position.

2. A package according to claim 1 , **characterised in that** the sealing compound (11) is selected from the group comprising , pure or mixed :
a) paraffins ;
b) compounds that behave like paraffins by solidifying at a constant temperature , said compounds being in the form of macrocrystals ;
c) microcrystalline waxes ; and
d) paraffins that include additives.

3. A package according to claim 2 , **characterised in that** the sealing compound (11) is a paraffin or a compound that behaves like a paraffin, having a solidification temperature lying in the range 48°C to 53°C, and preferably at 51°C.

4. A package according to claim 2 , **characterised in that** the sealing compound (11) is a microcrystalline wax whose melting point lies in the range 64°C to 72°C.

5. A package according to claim 2 , **characterised in that** the sealing compound (11) is a paraffin containing an additive and whose melting point lies in the range 65°C to 70°C.

6. A package according to one of claims 1 to 5 , **characterised in that** the flexible membrane (8) is fixed to the base (9) via two longitudinal edges (9a, 9b).

7. A package according to one of claims 1 to 6 , **characterised in that** the sealing compound (11) is based on the inside face of the flexible membrane (8).

8. A package according to claim 7 , **characterised in that** the sealing compound (11) is disposed in the form of a drop in the empty central recess (10).

9. A package according to claim 7 , **characterised in that** the sealing compound (11) is disposed in the form of a continuous coating on the inside face of the flexible membrane.

10. A package according to one of claims 1 to 9 , **characterised in that** the valve (5) opens when the pressure inside the package is about 10 mbar.

11. A package (5) according to one of claims 1 to 10, **characterised in that** the valve closes when the pressure inside the package is about 3 mbar.

12. A method for implementing a package according to one of claims 1 to 11, for foodstuffs, in which method said package is subjected to at least one period of heat treatment at a temperature higher than 60°C.

13. A method for implementing a package according to any one of claims 1 to 11, for single-use substances such as medical or pharmaceutical substances , in which method the package is subjected to at least one sterilization treatment.
